# EUROPÄISCHE PATENTANMELDUNG

(11) **EP 3 462 132 A2**
(43) Veröffentlichungstag der Anmeldung: **03.04.2019**
(21) Anmeldenummer: 18191873.1
(22) Anmeldetag: 31.08.2018
(51) Int. Cl.: G01C 21/16

(54) **VERFAHREN ZUM BESTIMMEN EINER AKTUELLEN POSITION EINES KRAFTFAHRZEUGS, STEUEREINRICHTUNG, FAHRZEUGMODUL, POSITIONSBESTIMMUNGSSYSTEM SOWIE KRAFTFAHRZEUG**

(30) Priorität: 12.09.2017 DE 102017121017
(71) Anmelder: Valeo Schalter und Sensoren GmbH, 74321 Bietigheim-Bissingen (DE)
(72) Erfinder: Kaiser, Frank, 74321 Bietigheim-Bissingen (DE); Saad, Mohamed, 74321 Bietigheim-Bissingen (DE)

(57) **Zusammenfassung**

Die Erfindung betrifft ein Verfahren zum Bestimmen einer aktuellen Position (P) eines Kraftfahrzeugs (1) in einem Umgebungsbereich (3) des Kraftfahrzeugs (1), wobei von einer Steuereinrichtung (11) des Kraftfahrzeugs (1) Inertialsensordaten einer Inertialsensoreinrichtung (10) des Kraftfahrzeugs (1) sowie Odometriedaten einer Odometriesensoreinrichtung (9) des Kraftfahrzeugs (1) empfangen werden und wobei anhand der Inertialsensordaten des Kraftfahrzeugs (1) ein, eine Bewegung des Kraftfahrzeugs (1) beschreibender Bewegungsvektor bestimmt wird, anhand der Odometriedaten die Bewegung des Kraftfahrzeus (1) beschreibende Stützdaten bestimmt werden, anhand der Stützdaten der Bewegungsvektor korrigiert wird und in Abhängigkeit von dem korrigierten Bewegungsvektor die aktuelle Position (P) des Kraftfahrzeugs (1) bestimmt wird. Die Erfindung betrifft außerdem eine Steuereinrichtung (11), ein Fahrzeugmodul, ein Positionsbestimmungssystem (2) sowie ein Kraftfahrzeug (1).

## Beschreibung

Die Erfindung betrifft ein Verfahren zum Bestimmen einer aktuellen Position eines Kraftfahrzeugs in einem Umgebungsbereich des Kraftfahrzeugs, wobei von einer Steuereinrichtung des Kraftfahrzeugs Inertialsensordaten einer Inertialsensoreinrichtung des Kraftfahrzeugs sowie Odometriedaten einer Odometriesensoreinrichtung des Kraftfahrzeugs empfangen werden. Die Erfindung betrifft außerdem eine Steuereinrichtung, ein Fahrzeugmodul, ein Positionsbestimmungssystem sowie ein Kraftfahrzeug.

Es ist bereits aus dem Stand der Technik bekannt, eine aktuelle Position eines Kraftfahrzeugs in einem Umgebungsbereich des Kraftfahrzeugs zu bestimmen. Anhand der aktuellen Position und anhand von Umgebungsinformationen, beispielsweise einer Straßenkarte, kann das Kraftfahrzeug zu einem von einem Fahrer des Kraftfahrzeugs ausgewählten Zielort navigiert werden. Dazu wird die Position üblicherweise mittels eines satellitengestützten Positionsbestimmungssystems, beispielsweise GPS (Globales Positionsbestimmungssystem), bestimmt, indem die von dem satellitengestützten Positionsbestimmungssystems bereitgestellten Positionssignale von einem fahrzeugseitigen Empfänger, beispielsweise einem GPS-Gerät, empfangen werden. Dabei kann es vorkommen, dass kein Positionssignal empfangen werden kann, beispielsweise wenn sich das Kraftfahrzeug in einem Funkloch befindet. Ein solches Funkloch kann beispielsweise bei der Fahrt des Kraftfahrzeugs in einem Tunnel auftreten. Auch kann es vorkommen, dass die satellitengestützte Positionsbestimmung aufgrund von multiplen Reflexionen des Positionssignals an anderen Fahrzeugen oder Gebäuden in dem Umgebungsbereich fehlerhaft ist. Um das Kraftfahrzeug dennoch zuverlässig navigieren zu können, ist es bereits bekannt, dass in diesen Fällen die Positionsbestimmung auf andere Weise erfolgt.

Beispielsweise ist in der DE 10 2015 003 724 A1 ein Verfahren zum Bestimmen einer aktuellen Position eines Kraftfahrzeugs auf einer Fahrbahn beschrieben, bei welchem ein Grobpositionswert des Kraftfahrzeugs anhand eines Abgleichs von Daten eines satellitengestützten Positionsbestimmungssystems und einer digitalen Landkarte bestimmt wird, ein Feinpositionswert anhand des Grobpositionswertes mittels Odometrie bestimmt wird und die aktuelle Position anhand des Feinpositionswertes bestimmt wird. Auch die DE 10 2016 001 269 A1 offenbart ein Verfahren zum Bestimmen einer aktuellen Position eines Kraftfahrzeugs auf einer Fahrbahn, bei welchem ein Orientierungspunkt welcher eine Position und/oder eine Ausrichtung des Kraftfahrzeugs beschreibt, anhand von Daten eines satellitengestützten Positionsbestimmungssystems und/oder mittels Odometrie und/oder mittels eines Inertialsensors bestimmt wird und die aktuelle Position des Kraftfahrzeugs anhand des Orientierungspunktes bestimmt wird. Außerdem wird ein Versatz des Orientierungspunktes anhand eines Referenzorientierungspunktes einer digitalen Landkarte bestimmt und eine Korrektur des Orientierungspunktes durch den Versatz in Abhängigkeit von einer aktuellen Fahrtsituation des Kraftfahrzeugs durchgeführt.

Es ist Aufgabe der vorliegenden Erfindung, eine Lösung bereitzustellen, wie eine aktuelle Position eines Kraftfahrzeugs besonders genau und auf besonders kostengünstige Weise bestimmt werden kann.

Diese Aufgabe wird erfindungsgemäß durch ein Verfahren, eine Steuereinrichtung, ein Fahrzeugmodul, ein Positionsbestimmungssystem sowie ein Kraftfahrzeug mit den Merkmalen gemäß den jeweiligen unabhängigen Patentansprüchen gelöst. Vorteilhafte Ausführungsformen der Erfindung sind Gegenstand der abhängigen Patentansprüche, der Beschreibung und der Figuren.

Gemäß einer Ausführungsform eines erfindungsgemäßen Verfahrens zum Bestimmen einer aktuellen Position eines Kraftfahrzeugs in einem Umgebungsbereich des Kraftfahrzeugs werden von einer Steuereinrichtung des Kraftfahrzeugs insbesondere Inertialsensordaten einer Inertialsensoreinrichtung des Kraftfahrzeugs sowie Odometriedaten einer Odometriesensoreinrichtung des Kraftfahrzeugs empfangen. Insbesondere wird anhand der Inertialsensordaten des Kraftfahrzeugs ein, eine Bewegung des Kraftfahrzeugs beschreibender Bewegungsvektor bestimmt und anhand der Odometriedaten werden die Bewegung des Kraftfahrzeus beschreibende Stützdaten bestimmt. Anhand der Stützdaten kann der Bewegungsvektor korrigiert werden und in Abhängigkeit von dem korrigierten Bewegungsvektor kann die aktuelle Position des Kraftfahrzeugs bestimmt werden.

Gemäß einer besonders bevorzugten Ausführungsform eines erfindungsgemäßen Verfahrens zum Bestimmen einer aktuellen Position eines Kraftfahrzeugs in einem Umgebungsbereich des Kraftfahrzeugs werden von einer Steuereinrichtung des Kraftfahrzeugs Inertialsensordaten einer Inertialsensoreinrichtung des Kraftfahrzeugs sowie Odometriedaten einer Odometriesensoreinrichtung des Kraftfahrzeugs empfangen. Darüber hinaus wird anhand der Inertialsensordaten des Kraftfahrzeugs ein, eine Bewegung des Kraftfahrzeugs beschreibender Bewegungsvektor bestimmt und anhand der Odometriedaten werden die Bewegung des Kraftfahrzeus beschreibende Stützdaten bestimmt. Anhand der Stützdaten wird der Bewegungsvektor korrigiert und in Abhängigkeit von dem korrigierten Bewegungsvektor wird die aktuelle Position des Kraftfahrzeugs bestimmt.

Mittels des Verfahrens kann ein Positionsbestimmungssystem für das Kraftfahrzeug realisiert werden, anhand dessen die aktuelle Position sowie eine aktuelle Orientierung des Kraftfahrzeugs in dem Umgebungsbereich des Kraftfahrzeugs geschätzt bzw. bestimmt werden kann. Die geschätzte Position wird insbesondere zum Navigieren des Kraftfahrzeugs verwendet. Die Positionsbestimmung erfolgt dabei insbesondere durch Fusionieren der Inertialsensordaten mit den Odometriedaten. Die Inertialsensordaten werden insbesondere von zumindest einem Inertialsensor der Inertialsensoreinrichtung erfasst und der Steuereinrichtung des Kraftfahrzeugs bereitgestellt. Eine Navigation des Kraftfahrzeugs anhand von Positionsdaten, welche basierend auf Inertialsensordaten bestimmt wird, wird auch als Trägheitsnavigation bezeichnet. Als die Inertialsensordaten können beispielsweise Beschleunigungsdaten des Kraftfahrzeugs entlang der drei Raumrichtungen und/oder Winkelgeschwindigkeitsdaten um die drei Raumachsen erfasst werden. Anhand der Inertialsensordaten kann dann der die Bewegung des Kraftfahrzeugs beschreibende Bewegungsvektor bestimmt werden. Der Bewegungsvektor beschreibt insbesondere eine Bewegungsrichtung sowie eine Geschwindigkeit des Kraftfahrzeugs, welche beispielsweise anhand der Beschleunigungsdaten und/oder der Winkelgeschwindigkeitsdaten bestimmt werden kann. Der Bewegungsvektor beschreibt also eine Positionsänderung des Kraftfahrzeugs sowie eine Richtung der Positionsänderung. Anhand des Bewegungsvektors kann die aktuelle Position des Kraftfahrzeugs in dem Umgebungsbereich vorhergesagt werden.

Dieser Bewegungsvektor kann jedoch aufgrund eines Drifts bzw. einer systematischen Messabweichung der Inertialsensordaten fehlerbehaftet sein. Um nun zu verhindern, dass dieser fehlerbehaftete Bewegungsvektor zur Positionsbestimmung verwendet wird und eine fehlerhafte aktuelle Position des Kraftfahrzeugs bestimmt wird, werden die Odometriedaten zur Überprüfung und Plausibilisierung des Bewegungsvektors verwendet. Beispielsweise kann anhand der Odometriedaten als die Stützdaten ein weiterer Bewegungsvektor bestimmt werden, welcher die Bewegung, also die Positionsänderung sowie die Bewegungsrichtung, des Kraftfahrzeugs ebenfalls charakterisiert. Anhand dieses weiteren, zweiten Bewegungsvektors kann der anhand der Inertialsensordaten bestimmte erste Bewegungsvektor korrigiert werden. Insbesondere werden die Inertialsensordaten anhand der Odometriedaten korrigiert.

Insbesondere kann in Abhängigkeit von einer vorbestimmten Startposition mittels des korrigierten Bewegungsvektors die aktuelle Position des Kraftfahrzeugs mit einer hohen Genauigkeit zuverlässig bestimmt werden. Die Startposition kann beispielsweise mittels eines Positionssignals eines satellitengestützten Positionsbestimmungssystems bestimmt werden. Beispielsweise kann mittels des Positionssignals des satellitengestützten Positionsbestimmungssystems einmalig die Startposition bestimmt werden, ausgehend von welcher die aktuelle Position anhand des korrigierten Bewegungsvektors vorhergesagt wird. Das Positionssignal des satellitengestützten Positionsbestimmungssystems wird hier insbesondere nur unterstützend verwendet. Eine Positionsbestimmung des Kraftfahrzeugs und eine Navigation des Kraftfahrzeugs erfolgt hier insbesondere hauptsächlich mittels der Inertialsensordaten, welche mittels der Odometriedaten überprüft und korrigiert werden.

Durch die Korrektur der Inertialsensordaten anhand der Odometriedaten kann eine Genauigkeit bei der Positionsbestimmung, beispielsweise von 1 m bei einer Fahrt von 1 km, erreicht werden. Somit kann das Positionsbestimmungssystem auch zum autonomen Manövrieren des Kraftfahrzeugs entlang einer vorbestimmten Fahrtroute zu einem Zielort eingesetzt werden, bei welchem hohe Anforderungen an eine Genauigkeit bei der Positionsbestimmung gestellt sind.

Vorzugsweise werden als die Inertialsensordaten Beschleunigungsdaten des Kraftfahrzeugs zumindest eines Beschleunigungssensors, insbesondere eines piezoelektrischen Beschleunigungssensors, der Inertialsensoreinrichtung und/oder Winkelgeschwindigkeitsdaten des Kraftfahrzeugs zumindest eines Drehratensensors, insbesondere eines mikromechanischen Drehratensensors, der Inertialsensoreinrichtung empfangen. Die Inertialsensoreinrichtung bzw. Inertiale Messeinheit, welche die Inertialsensordaten erfasst, weist insbesondere mikroelektromechanische Sensoren, sogenannte MEMS-Bauteile (MEMS-Mikroelektromechanische Systeme), auf, welche besonders kleine Abmessungen aufweisen und in hoher Stückzahl kostengünstig gefertigt werden können.

Zum Messen von translatorischen Bewegungen, also Beschleunigungen des Kraftfahrzeugs, entlang der drei Raumrichtungen können drei Beschleunigungssensoren orthogonal zueinander angeordnet werden. Jeder Beschleunigungssensor ist dabei entlang einer Raumrichtung sensitiv und kann die translatorische Bewegung des Kraftfahrzeugs entlang der dem Beschleunigungssensor zugeordneten Raumrichtung messen. Die Drehratensensoren können beispielsweise mikromechanische Gyroskope sein, welche rotierende Bewegungen, also Winkelgeschwindigkeiten, um die drei Raumachsen messen. Dazu kann für jede Raumachse jeweils ein Drehratensensor vorgesehen sein. Durch die Verwendung von mikromechanischen Inertialsensoren kann in vorteilhafter Weise ein kostengünstiges Positionsbestimmungssystem für das Kraftfahrzeug bereitgestellt werden.

In einer Ausführungsform der Erfindung werden als die Odometriedaten Raddrehzahldaten zumindest eines Raddrehzahlsensors der Odometriesensoreinrichtung und/oder Lenkwinkeldaten zumindest eines Lenkwinkelsensors der Odometriesensoreinrichtung empfangen. Der zumindest eine Raddrehzahlsensor ist dazu ausgelegt, eine Raddrehzahl zumindest eines Rades des Kraftfahrzeugs zu messen. Anhand der Raddrehzahl können eine Drehgeschwindigkeit des zumindest einen Rades und somit die Geschwindigkeit des Kraftfahrzeugs gemessen werden. Der zumindest eine Lenkwinkelsensor kann beispielsweise als ein magnetischer Lenkwinkelsensor ausgebildet sein und den Lenkwinkel bzw. eine Position des Lenkrades des Kraftfahrzeugs messen. Aus dem Lenkwinkel kann eine Bewegungsrichtung bzw. Fahrtrichtung des Kraftfahrzeugs bestimmt werden. Als die Stützdaten können also aus den Odometriedaten beispielsweise die Geschwindigkeit des Kraftfahrzeugs sowie die Bewegungsrichtung des Kraftfahrzeugs bestimmt werden, anhand derer die aus den Inertialsensordaten bestimmte Geschwindigkeit und Bewegungsrichtung des Kraftfahrzeugs überprüft und plausibilisiert werden kann. Solche Odometriesensoren in Form von Lenkwinkelsensoren und Raddrehzahlsensoren sind üblicherweise bereits im Kraftfahrzeug verbaut, da deren Odometriedaten beispielsweise für eine elektronische Stabilitätskontrolle des Kraftfahrzeugs verwendet werden. Diese Odometriedaten können nun der Steuereinrichtung bereitgestellt werden und somit zusätzlich zum Bestimmen der Stützdaten für die Überprüfung und Korrektur des Bewegungsvektors verwendet werden.

In einer Weiterbildung der Erfindung wird anhand der basierend auf dem korrigierten Bewegungsvektor bestimmten aktuellen Position des Kraftfahrzeugs eine mittels eines satellitengestützten Positionsbestimmungssystems bestimmte aktuelle Position des Kraftfahrzeugs korrigiert. Dieser Weiterbildung liegt die Erkenntnis zugrunde, dass basierend auf satellitengestützten Positionssignalen bestimmte Positionen des Kraftfahrzeugs, beispielsweise aufgrund von Reflexionen an Gebäuden oder anderen Fahrzeugen in dem Umgebungsbereich des Kraftfahrzeugs, fehlerhaft sein können. Diese anhand der satellitengestützten Positionssignale bestimmten Positionen können basierend auf der anhand des korrigierten Bewegungsvektors bestimmten aktuellen Position des Kraftfahrzeugs korrigiert werden.

Vorzugsweise werden zum Bestimmen des korrigierten Bewegungsvektors und zum Bestimmen der aktuellen Position des Kraftfahrzeugs die Inertialsensordaten und die Odometriedaten mittels eines erweiterten Kalman-Filters fusioniert. Das Kalman-Filter berechnet bzw. prädiziert basierend auf den zu einem ersten Messzeitpunkt erfassten Inertialsensordaten und den Odometriesensordaten einen Zustand, welcher insbesondere den Bewegungsvektor umfasst und welcher wiederum anhand der zu einem zweiten Messzeitpunkt erfassten Inertialsensordaten und Odometriedaten überprüft wird. Ein solches Kalman-Filter, welches die aktuelle Position des Kraftfahrzeugs besonders genau geschätzt kann, kann besonders einfach implementiert werden.

Es kann vorgesehen sein, dass das Kraftfahrzeug anhand der basierend auf dem korrigierten Bewegungsvektor bestimmten aktuellen Position und anhand von bereitgestellten Umfeldinformationen, durch welche der Umgebungsbereich des Kraftfahrzeugs beschrieben wird, navigiert wird. Solche Umfeldinformationen können beispielsweise in Form von einer Straßenkarte bereitgestellt werden. Anhand des korrigierten Bewegungsvektors kann die aktuelle Position des Kraftfahrzeugs in der Straßenkarte bestimmt werden und das Kraftfahrzeug somit zuverlässig in dem Umgebungsbereich navigiert werden. Durch die hohe Genauigkeit bei der Positionsbestimmung kann das Kraftfahrzeug auch autonom in dem Umgebungsbereich manövriert werden.

Die Erfindung betrifft außerdem eine Steuereinrichtung für ein Kraftfahrzeug, welche dazu ausgelegt ist, ein erfindungsgemäßes Verfahren oder eine vorteilhafte Ausführungsform davon durchzuführen. Zum Empfangen der Inertialsensordaten und zum Empfangen der Odometriedaten kann die Steuereinrichtung mit der Inertialsensoreinrichtung und der Odometriesensoreinrichtung, beispielsweise drahtgebunden über einen Hochgeschwindigkeitsbus bzw. Highspeed-Bus, kommunizieren.

Ein erfindungsgemäßes Fahrzeugmodul für ein Kraftfahrzeug umfasst zumindest einen ersten Odometriesensor einer Odometriesensoreinrichtung zum Erfassen von Odometriedaten des Kraftfahrzeugs, eine Inertialsensoreinrichtung zum Erfassen von Inertialsensordaten des Kraftfahrzeugs und eine erfindungsgemäße Steuereinrichtung. Die Steuereinrichtung ist somit ein Steuergerät bzw. eine ECU (Electronic Control Unit) des Fahrzeugmoduls. Das Fahrzeugmodul ist insbesondere als ein Lenksäulenmodul ausgebildet. Das Lenksäulenmodul, welches auch als TCM (Top Column Module) bezeichnet werden kann, kann ein ortsfestes Bauteil aufweisen. Das ortsfeste Bauteil kann ortsfest in dem Kraftfahrzeug installiert werden, beispielsweise an einem karosseriefest angeordneten Mantel einer Lenksäule des Kraftfahrzeugs. Außerdem kann das Lenksäulenmodul ein an dem ortsfesten Bauteil drehbar gelagertes Nabenteil aufweisen, welches drehfest mit dem Lenkrad des Kraftfahrzeugs verbunden werden kann. Somit kann eine Bewegung des Lenkrades über das Lenksäulenmodul und die Lenksäule auf ein Lenkgestänge der Räder des Kraftfahrzeugs übertragen werden. Außerdem kann das Lenksäulenmodul Hebel bzw. Bedienelemente aufweisen, welche beispielsweise als ein Scheibenwischerhebel, ein Lichtschalter, ein Blinker und/oder ein Gangwahlschalter ausgeführt sein können. Das Lenksäulenmodul weist außerdem den ersten Odometriesensor sowie die Inertialsensoreinrichtung auf.

Vorzugsweise ist der zumindest eine erste Odometriesensor als ein Lenkwinkelsensor ausgebildet. Der Lenkwinkelsensor ist also in das Fahrzeugmodul, insbesondere das Lenksäulenmodul, integriert und dient zum Erfassen der Position des Lenkrades bzw. zum Erfassen des Lenkwinkels. Die Odometriesensoreinrichtung, welche zusätzlich zu dem Lenkwinkelsensor insbesondere auch einen zweiten Odometriesensor in Form von einem Raddrehzahlsensor aufweist, ist somit zumindest teilweise in das Fahrzeugmodul integriert. Die Inertialsensoreinrichtung sowie die Steuereinrichtung sind insbesondere vollständig in das Fahrzeugmodul integriert. Durch die Integration der Inertialsensoreinrichtung und der Steuereinrichtung in das Fahrzeugmodul kann die Steuereinrichtung somit besonders schnell auf den aktuellen Lenkwinkel, insbesondere auf eine Lenkwinkeländerung, des Kraftfahrzeugs zugreifen.

Der zumindest eine erste Odometriesensor und die Inertialsensoreinrichtung sind insbesondere gemeinsam auf einem Sensorchip angeordnet. Der erste Odometriesensor, insbesondere der Lenkwinkelsensor, und die Inertialsensoreinrichtung bilden somit ein Mikrosystem, welches auf einem gemeinsamen Sensorchip angeordnet ist. Somit können der erste Odometriesensor und die Inertialsensoreinrichtung besonders platzsparend in dem Fahrzeugmodul angeordnet werden.

Ferner betrifft die Erfindung ein Positionsbestimmungssystem für ein Kraftfahrzeug aufweisend ein erfindungsgemäßes Fahrzeugmodul und zumindest einen zweiten Odometriesensor zum Erfassen von Odometriedaten des Kraftfahrzeugs, wobei der zweite Odometriesensor als ein Raddrehzahlsensor ausgebildet ist und der zumindest eine erste Odometriesensor und der zumindest eine zweite Odometriesensor eine Odometriesensoreinrichtung bilden. Der Raddrehzahlsensor, welcher insbesondere auch für eine elektronische Stabilitätskontrolle des Kraftfahrzeugs verwendet wird, kann über einen Hochgeschwindigkeitsbus mit dem Fahrzeugmodul, insbesondere mit der Steuereinrichtung, verbunden sein. Somit kann die Steuereinrichtung des Fahrzeugmoduls die Raddrehzahldaten besonders schnell empfangen und daraus beispielsweise die Geschwindigkeit des Kraftfahrzeugs bestimmen.

Ein erfindungsgemäßes Kraftfahrzeug umfasst ein erfindungsgemäßes Positionsbestimmungssystem. Das Kraftfahrzeug ist insbesondere als ein Personenkraftwagen ausgebildet.

Die mit Bezug auf das erfindungsgemäße Verfahren vorgestellten bevorzugten Ausführungsformen und deren Vorteile gelten entsprechend für die erfindungsgemäße Steuereinrichtung, für das erfindungsgemäße Fahrzeugmodul, für das erfindungsgemäße Positionsbestimmungssystem sowie für das erfindungsgemäße Kraftfahrzeug.

Weitere Merkmale der Erfindung ergeben sich aus den Ansprüchen, den Figuren und der Figurenbeschreibung. Die vorstehend in der Beschreibung genannten Merkmale und Merkmalskombinationen, sowie die nachfolgend in der Figurenbeschreibung genannten und/oder in den Figuren alleine gezeigten Merkmale und Merkmalskombinationen sind nicht nur in der jeweils angegebenen Kombination, sondern auch in anderen Kombinationen oder in Alleinstellung verwendbar, ohne den Rahmen der Erfindung zu verlassen. Es sind somit auch Ausführungen von der Erfindung als umfasst und offenbart anzusehen, die in den Figuren nicht explizit gezeigt und erläutert sind, jedoch durch separierte Merkmalskombinationen aus den erläuterten Ausführungen hervorgehen und erzeugbar sind. Es sind auch Ausführungen und Merkmalskombinationen als offenbart anzusehen, die somit nicht alle Merkmale eines ursprünglich formulierten unabhängigen Anspruchs aufweisen. Es sind darüber hinaus Ausführungen und Merkmalskombinationen, insbesondere durch die oben dargelegten Ausführungen, als offenbart anzusehen, die über die in den Rückbezügen der Ansprüche dargelegten Merkmalskombinationen hinausgehen oder abweichen.

Die Erfindung wird nun anhand von bevorzugten Ausführungsbeispielen sowie unter Bezugnahme auf die beigefügten Zeichnungen näher erläutert.

Dabei zeigen:
- Fig. 1: eine schematische Darstellung einer Ausführungsform eines erfindungsgemäßen Kraftfahrzeugs; und
- Fig. 2: eine schematische Darstellung einer Ausführungsform eines erfindungsgemäßen Positionsbestimmungssystems.

In den Figuren sind gleiche sowie funktionsgleiche Elemente mit den gleichen Bezugszeichen versehen.

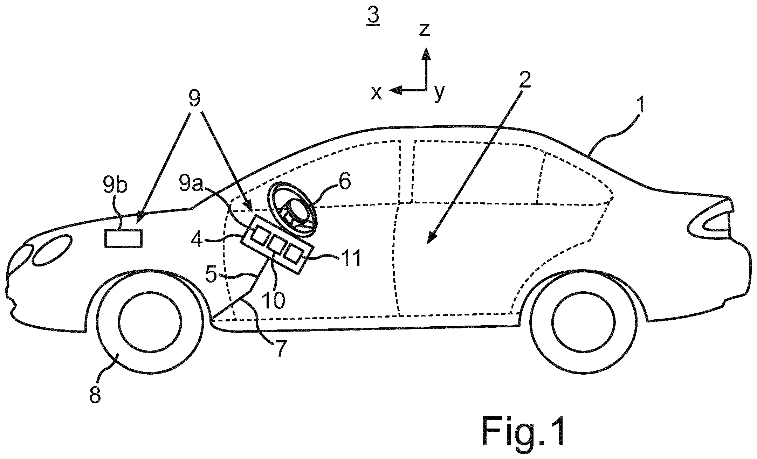

Fig. 1 zeigt ein Kraftfahrzeug 1 gemäß der vorliegenden Erfindung. Das Kraftfahrzeug 1 ist im vorliegenden Fall als ein Personenkraftwagen ausgebildet. Das Kraftfahrzeug 1 umfasst ein Positionsbestimmungssystem 2, welches dazu ausgelegt ist, eine aktuelle Position des Kraftfahrzeugs 1 in einem Umgebungsbereich 3 des Kraftfahrzeugs 1 zu bestimmen. Basierend auf der aktuellen Position des Kraftfahrzeugs 1 in dem Umgebungsbereich 3 sowie basierend auf den Umgebungsbereich 3 des Kraftfahrzeugs 1 beschreibenden Umfeldinformationen kann das Kraftfahrzeug 1 in dem Umgebungsbereich 3 navigiert werden. Insbesondere kann das Kraftfahrzeug 1 in dem Umgebungsbereich 3 autonom bzw. vollautomatisch manövriert werden. Dazu kann ein Steuergerät des Kraftfahrzeugs 1 eine Längsführung und eine Querführung des Kraftfahrzeugs 1 übernehmen. Anders ausgedrückt kann das Steuergerät das Kraftfahrzeug 1 automatisch lenken, beschleunigen und abbremsen.

Das Positionsbestimmungssystem 2 weist ein Fahrzeugmodul auf, welches hier als ein Lenksäulenmodul 4 ausgebildet ist. Das Lenksäulenmodul 4 kann ein ortsfestes Bauteil aufweisen, welches beispielsweise mit einem Gehäuse einer Lenksäule 5 verbunden sein kann, und ein bezüglich des ortsfesten Bauteils drehbar gelagertes Nabenteil aufweisen, welches mit einem Lenkrad 6 des Kraftfahrzeugs 1 verbunden sein kann. Über das Lenksäulenmodul 4 sowie die Lenksäule 5 kann eine Bewegung des Lenkrades 5 des Kraftfahrzeugs 1 auf ein Lenkgestänge 7 von Rädern 8 des Kraftfahrzeugs 1 übertragen werden.

Das Lenksäulenmodul 4 weist zumindest einen ersten Odometriesensor 9a auf, welcher im vorliegenden Fall als ein Lenkwinkelsensor, beispielsweise als ein magnetischer Lenkwinkelsensor, ausgebildet ist. Der erste Odometriesensor 9a ist dazu ausgelegt, Odometriedaten in Form von Lenkwinkeldaten des Kraftfahrzeugs 1 zu erfassen. Außerdem weist das Lenksäulenmodul 4 eine Inertialsensoreinrichtung 10 auf, welche dazu ausgelegt ist, Inertialsensordaten des Kraftfahrzeugs 1 zu empfangen. Der erste Odometriesensor 9a sowie die Inertialsensoreinrichtung 10 können beispielsweise auf einem gemeinsamen Sensorchip angeordnet sein und somit besonders platzsparend in das Lenksäulenmodul 4 integriert werden. Die Inertialsensoreinrichtung 10 weist insbesondere drei Beschleunigungssensoren, beispielsweise piezoelektrische Beschleunigungssensoren, und drei Drehratensensoren, beispielsweise mikromechanische Gyroskope, auf. Die Beschleunigungssensoren messen eine Beschleunigung des Kraftfahrzeugs 1 entlang der drei Raumrichtungen x, y, z. Die Drehratensensoren messen eine Winkelgeschwindigkeit des Kraftfahrzeugs 1 in den drei Raumrichtungen x, y, z. Außerdem weist das Lenksäulenmodul 4 eine Steuereinrichtung 11 auf, welche dazu ausgelegt ist, die Odometriesensordaten des Odometriesensor 9a sowie die Inertialsensordaten der Inertialsensoreinrichtung 10 zu empfangen.

Darüber hinaus weist das Positionsbestimmungssystem 2 zumindest einen zweiten Odometriesensor 9b auf, wobei der erste Odometriesensor 9a und der zweite Odometriesensor 9b eine Odometriesensoreinrichtung 9 des
Positionsbestimmungssystems 2 ausbilden. Der zweite Odometriesensor 9b kann beispielsweise als ein Raddrehzahlsensor zum Erfassen einer Raddrehzahl und damit einer Radgeschwindigkeit der Räder 8 des Kraftfahrzeugs 1 ausgebildet sein. Der zweite Odometriesensor 9b kann über einen Highspeed-Bus mit der Steuereinrichtung 11 des Lenksäulenmoduls 4 verbunden sein, sodass die Steuereinrichtung 11 zusätzlich zu den Odometriedaten in Form von Lenkwinkeldaten des ersten Odometriesensors 9a auch die Odometriedaten in Form von Raddrehzahldaten des zweiten Odometriesensors 9b empfangen kann.

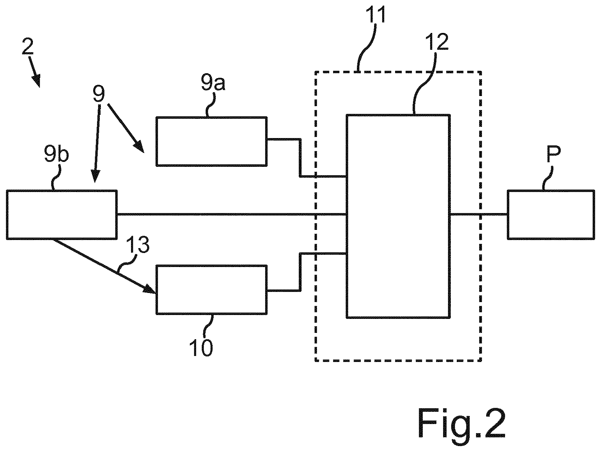

In Fig. 2 ist das Positionsbestimmungssystem 2 zur Bestimmung der aktuellen Position P des Kraftfahrzeugs 1 schematisch dargestellt. Die Steuereinrichtung 11 ist dazu ausgelegt, die Odometriesensordaten des ersten Odometriesensors 9a, die Odometriedaten des zweiten Odometriesensors 9b sowie die Inertialsensordaten der Inertialsensoreinrichtung 10 zu empfangen. Die Steuereinrichtung 11 weist außerdem ein erweitertes Kalman-Filter 12 auf, welchem die Odometriesensordaten der Odometriesensoreinrichtung 9 sowie die Inertialsensordaten der Inertialsensoreinrichtung 10 als Eingänge zugeführt werden. Das Kalman-Filter 12 ist dazu ausgelegt, die aktuelle Position P des Kraftfahrzeugs 1 durch Fusionieren der Inertialsensordaten der Inertialsensoreinrichtung 10 sowie der Odometriedaten der Odometriesensoreinrichtung 9 zu bestimmen. Anhand der Odometriesensordaten des zweiten Odometriesensors 9b, welche hier Stützdaten für den Kalman-Filter 12 sind, kann eine Korrektur 13 der Inertialsensordaten erfolgen, welche beispielsweise driften können und damit messfehlerbehaftet sind. Die Inertialsensordaten können also anhand der Odometriesensordaten überprüft, plausibilisiert und gegebenenfalls korrigiert werden.

## Patentansprüche

1. Verfahren zum Bestimmen einer aktuellen Position (P) eines Kraftfahrzeugs (1) in einem Umgebungsbereich (3) des Kraftfahrzeugs (1), wobei von einer Steuereinrichtung (11) des Kraftfahrzeugs (1) Inertialsensordaten einer Inertialsensoreinrichtung (10) des Kraftfahrzeugs (1) sowie Odometriedaten einer Odometriesensoreinrichtung (9) des Kraftfahrzeugs (1) empfangen werden, **dadurch gekennzeichnet, dass**
anhand der Inertialsensordaten des Kraftfahrzeugs (1) ein, eine Bewegung des Kraftfahrzeugs (1) beschreibender Bewegungsvektor bestimmt wird, anhand der Odometriedaten die Bewegung des Kraftfahrzeus (1) beschreibende Stützdaten bestimmt werden, anhand der Stützdaten der Bewegungsvektor korrigiert wird und in Abhängigkeit von dem korrigierten Bewegungsvektor die aktuelle Position (P) des Kraftfahrzeugs (1) bestimmt wird.

2. Verfahren nach Anspruch 1,
**dadurch gekennzeichnet, dass**
zum Bestimmen des korrigierten Bewegungsvektors die Inertialsensordaten anhand der Odometriedaten korrigiert werden.

3. Verfahren nach Anspruch 1 oder 2,
**dadurch gekennzeichnet, dass**
als die Inertialsensordaten Beschleunigungsdaten des Kraftfahrzeugs (1) zumindest eines Beschleunigungssensors, insbesondere eines piezoelektrischen Beschleunigungssensors, der Inertialsensoreinrichtung (10) und/oder Winkelgeschwindigkeitsdaten des Kraftfahrzeugs (1) zumindest eines Drehratensensors, insbesondere eines mikromechanischen Drehratensensors, der Inertialsensoreinrichtung (10) empfangen werden.

4. Verfahren nach einem der vorhergehenden Ansprüche,
**dadurch gekennzeichnet, dass**
als die Odometriedaten Raddrehzahldaten zumindest eines Raddrehzahlsensors der Odometriesensoreinrichtung (9) und/oder Lenkwinkeldaten zumindest eines Lenkwinkelsensors der Odometriesensoreinrichtung (9) empfangen werden.

5. Verfahren nach einem der vorhergehenden Ansprüche,
**dadurch gekennzeichnet, dass**
anhand der basierend auf dem korrigierten Bewegungsvektor bestimmten aktuellen Position (P) des Kraftfahrzeugs (1) eine mittels eines satellitengestützten Positionsbestimmungssystems bestimmte aktuelle Position des Kraftfahrzeugs (1) korrigiert wird.

6. Verfahren nach einem der vorhergehenden Ansprüche,
**dadurch gekennzeichnet, dass**
zum Bestimmen des korrigierten Bewegungsvektors und zum Bestimmen der aktuellen Position (P) des Kraftfahrzeugs (1) die Inertialsensordaten und die Odometriedaten mittels eines erweiterten Kalman-Filters (12) fusioniert werden.

7. Verfahren nach einem der vorhergehenden Ansprüche,
**dadurch gekennzeichnet, dass**
das Kraftfahrzeug (1) anhand der basierend auf dem korrigierten Bewegungsvektor bestimmten aktuellen Position (P) und anhand von bereitgestellten Umfeldinformationen, durch welche der Umgebungsbereich (3) des Kraftfahrzeugs (1) beschrieben wird, navigiert wird.

8. Steuereinrichtung (11) für ein Kraftfahrzeug (1), welche dazu ausgelegt ist, ein Verfahren nach einem der vorhergehenden Ansprüche durchzuführen.

9. Fahrzeugmodul, insbesondere Lenksäulenmodul (4), für ein Kraftfahrzeug (1) aufweisend zumindest einen ersten Odometriesensor (9a) einer Odometriesensoreinrichtung (9) zum Erfassen von Odometriedaten des Kraftfahrzeugs (1), eine Inertialsensoreinrichtung (10) zum Erfassen von Inertialsensordaten des Kraftfahrzeugs (1) und eine Steuereinrichtung (11) nach Anspruch 8.

10. Fahrzeugmodul nach Anspruch 9,
**dadurch gekennzeichnet, dass**
der zumindest eine erste Odometriesensor (9a) der Odometriesensoreinrichtung (9) als ein Lenkwinkelsensor ausgebildet ist.

11. Fahrzeugmodul nach Anspruch 9 oder 10,
**dadurch gekennzeichnet, dass**
der zumindest eine erste Odometriesensor (9a) und die Inertialsensoreinrichtung (10) auf einem gemeinsamen Sensorchip angeordnet sind.

12. Positionsbestimmungssystem (2) für ein Kraftfahrzeug (1) aufweisend ein Fahrzeugmodul nach einem der Ansprüche 9 bis 11, und zumindest einen zweiten Odometriesensor (9b) zum Erfassen von Odometriedaten des Kraftfahrzeugs (1), wobei der zumindest eine zweite Odometriesensor (9b) als ein Raddrehzahlsensor ausgebildet ist und wobei der zumindest eine erste Odometriesensor (9a) und der zumindest eine zweite Odometriesensor (9b) eine Odometriesensoreinrichtung (9) bilden.

13. Kraftfahrzeug (1) mit einem Positionsbestimmungssystem (2) nach Anspruch 12.
